# EUROPEAN PATENT APPLICATION

(11) **EP 1 923 877 A1**
(43) Date of publication of application: **21.05.2008**
(21) Application number: 07022108.0
(22) Date of filing: 14.11.2007
(51) Int. Cl.: G11B 7/135, G02B 5/18

(54) **Optical pickup device**

(30) Priority: 17.11.2006 JP 2006311983
(71) Applicant: Funai Electric Co., Ltd., Daito-shi Osaka 574-0013 (JP)
(72) Inventor: Takemoto, Seiji, Daito-shi Osaka 574-0013 (JP)
(74) Representative: Beetz & Partner

(57) **Abstract**

An optical pickup device includes three laser light sources, one objective lens, and a beam shaping mirror. The beam shaping mirror converts light intensity distribution of the laser beams having the respective wavelengths from an elliptic shape to a circular shape by inputting the respective laser beams from a transmission surface, reflecting the laser beams by a reflection surface that is not parallel to the transmission surface and outputting the laser beams from the transmission surface. Two kinds of diffraction gratings are formed on the reflection surface and the plurality of diffraction gratings are formed alternately and side by side. The two kinds of diffraction gratings diffract the laser beams having two out of the three wavelengths such that dispersion by the refracting action at the transmission surface is canceled out using the dispersion by the diffracting action at the reflection surface.

## Description

### BACKGROUND OF THE INVENTION

### 1. Field of the Invention

The present invention relates to an optical pickup device, in particular, the present invention relates to an optical pickup device which is, for example, compatible with three kinds of optical discs such as a CD (compact disc), a DVD (digital versatile disc), a BD (Bluray Disc or the like: high density optical disc utilizing blue laser beam) and the like.

### 2. Description of Related Art

For example, in a three wavelengths and one lens type optical pickup device which is applicable to three kinds of optical discs such as a CD, a DVD and a BD in which wavelengths of used laser beams are different by one objective lens, it is necessary to make a beam spot that is formed by the objective lens in a circular shape which has a small diameter in order to obtain enough reproducing signal from any kind of the optical discs. Further, it is also necessary to correct inclination of the laser beam with respect to an optical axis so that all the laser beams are input to the objective lens from the same direction.

As for the spot shape an optical pickup device in which correction of rim strength (that is, peripheral intensity ratio of flux of light which is input to the objective lens) is performed utilizing a beam shaping element (for example, a prism or a cylindrical lens) that converts a laser beam from an elliptic shape beam to a circular shape beam, is proposed in JP-A-2005-309351 and the like. Further, as for a direction of the laser beam, a two wavelength and one lens type optical pickup device which utilizes a composite function prism that has inclination correction function for laser beam and the beam shaping function as an upstand mirror, is proposed in JP-A-2002-207110. A wavelength selectivitity film is evaporated on a first surface of the composite function prism to correct a laser beam having a wavelength which is reflected at the first surface and a laser beam having a wavelength that passes the first surface and reflected at a second surface such that the two laser beams become a same inclination state with respect to an optical axis.

However, when the beam shaping element which is proposed in JP-A-2005-309351 is disposed for each of wavelengths, the whole optical system of the optical pickup device becomes larger and more complicated. Further, in a case of the two wavelengths and one lens type optical pickup device which is proposed in JP-A-2002-207110, the laser beam having the wavelength which is reflected by the wavelength selectivity film of the composite function prism is not beam-shaped. That is to say, the beam shaping can be performed on only one wavelength, as a result, high output power is necessary for a laser light source which emits laser beam having the other wavelength.

### SUMMARY OF THE INVENTION

An object of the present invention is to provide an optical pickup device which is possible to obtain good signal by the beam shaping for the laser beams having three wavelengths and the inclination correction with respect to an optical axis even though the device has a simple and compact structure.

An optical pickup device in an aspect of the present invention is a three wavelengths and one lens type optical pickup device which is applicable to three kinds of optical discs in which wavelengths of used laser beams are different by three laser light sources which emit laser beams having different wavelength each other and one objective lens and includes a beam shaping mirror. The beam shaping mirror is in an optical path between the objective lens and the three laser light sources. And the beam shaping mirror converts light intensity distribution of the laser beams having the respective wavelengths from an elliptic shape to a circular shape by inputting the respective laser beams from a transmission surface, reflecting the laser beams by a reflection surface that is not parallel to the transmission surface and outputting the laser beams from the transmission surface. Two kinds of diffraction gratings are formed on the reflection surface and the plurality of diffraction gratings are formed alternately and side by side. The two kinds of diffraction gratings diffract the laser beams having two out of the three wavelengths such that dispersion by the refracting action at the transmission surface is canceled out using the dispersion by the diffracting action at the reflection surface.

### BRIEF DESCRIPTION OF THE DRAWINGS

Fig. 1 is a schematic diagram to show an embodiment of an optical pickup device;
Figs. 2A and 2B are diagrams to show a cross section and an optical path of a beam shaping mirror;
Figs. 3A to 3C are diagrams to show an optical path for explaining inclination correction with respect to an optical axis by a beam shaping mirror;
Fig. 4 is a schematic diagram to show an example of layout pattern of diffraction gratings which are formed on a beam shaping mirror; and
Figs. 5A and 5B are schematic diagrams to explain parameters used in simulation of beam shaping.

### DETAILED DESCRIPTION OF THE PREFERRED EMBODIMENTS

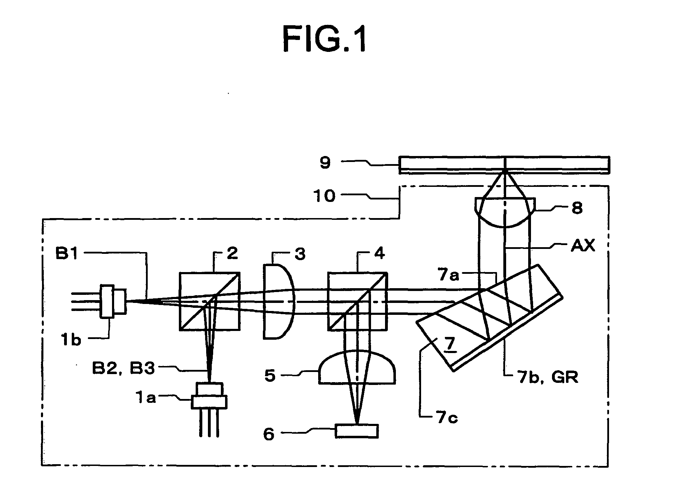

Hereinafter embodiment and the like of an optical pickup device in accordance with the present invention will be described with reference to the attached drawings. In Fig. 1 general structure of one embodiment of an optical pickup device is shown schematically. This optical pickup device 10 is a three wavelengths and one lens type optical pickup device which is applicable to three kinds of optical discs 9 in which wavelengths of used laser beams are different by three laser light sources having different oscillation wavelengths (The light sources are composed of two light sources mounted on a two wavelength semiconductor laser 1a for red / infrared laser and one light source mounted on a semiconductor laser 1b for blue laser) and one objective lens 8. And the device 10 has a structure which can perform recording and reproducing of information for each of the three kinds of optical discs 9.

The three kinds of optical discs 9 which are supposed here are, for example, a first optical disc which is applicable to blue laser having wavelength λ1 of 405 nm, i.e., a high density optical disc having base plate thickness of 0.1 mm, numerical aperture (NA) of 0.85 and using blue laser beam, a second optical disc which is applicable to red laser having wavelength λ2 of 650 nm, i.e., a DVD having base plate thickness of 0.6 mm, NA of 0.6 to 0.65 and a third optical disc which is applicable to infrared laser having wavelength λ3 of 780 nm, i.e., a CD having base plate thickness of 1.2 mm, NA of 0.45 to 0.5. However, wavelengths which are used are not limited to these examples. Further as for applicable objects the present invention is not limited to the optical disc but it is applicable to any optical information recording medium other than optical disc.

The optical pickup device 10 which is shown in Fig. 1 is equipped with the two wavelength semiconductor laser 1a for red / infrared laser, the semiconductor laser 1b for blue laser, a dichroic prism 2, a collimator lens 3, a beam splitter 4, a condenser lens 5, a photo detector 6, a beam shaping mirror 7, an objective lens 8 and the like. Hereafter, an optical structure of the optical pickup device 10 will be explained in an order along its optical path.

The optical pickup device 10 includes the two light sources mounted on the two wavelength semiconductor laser 1a for red / infrared laser and the one light source mounted on the semiconductor laser 1b for blue laser as the laser light sources as above described. Recording or reproducing of the optical information to the corresponding optical disc 9 is performed using a blue laser beam B1 having wavelength of λ1, a red laser beam B2 having wavelength of λ2 or an infrared laser beam B3 having wavelength of λ3 (λ1 < λ2 < λ3). The laser beams are emitted by lighting-up of any one of the three laser light sources.

The laser beam B1, B2 or B3 which is emitted from the semiconductor laser 1a or 1b is input to the dichroic prism 2. The dichroic prism 2 is an optical path combining element which combines the optical paths of the blue laser beam B1, the red laser beam B2 and the infrared laser beam B3. Therefore, because the dichroic prism 2 transmits the blue laser beam B1 which is emitted from the semiconductor laser 1b and reflects the red laser beam B2 or the infrared laser beam B3 which is emitted from the semiconductor laser 1a, the optical paths of the laser beam B1, B2 and B3 are combined.

The laser beam B1, B2 or B3 which is output from the dichroic prism 2 is converted into a beam of parallel light by the collimator lens 3, then a part of it passes through the beam splitter 4. The beam splitter 4 is an optical path dividing element which divides an optical path from the respective semiconductor lasers 1 a and 1b to the optical disc 9 from an optical path from the optical disc 9 to the photo detector 6. And the beam splitter 4 functions as a half mirror to divide light amount of input light in two to transmitted light and reflected light.

The laser beam B1, B2 or B3 which passes the beam splitter 4 is input to the beam shaping mirror 7. The beam shaping mirror 7 is composed of a transparent member 7c which has a trapezoidal shape cross section. The beam shaping mirror 7 inputs the respective laser beams B1, B2 and B3 from a transmission surface 7a, reflects the laser beams by a reflection surface 7b which is not parallel to the transmission surface 7a and outputs the laser beams from the transmission surface 7a. The optical paths of the laser beams B1, B2 and B3 having respective wavelengths are bent at substantially ninety (90) degrees to a direction of the objective lens 8 by a function of the beam shaping mirror 7 as an upstand mirror. And at the same time light intensity distribution of the laser beams are converted from an elliptic shape to a circular shape by a beam shaping function of the beam shaping mirror 7. A detail of the beam shaping mirror 7 will be described later.

The laser beam B1, B2 or B3 which is output from the beam shaping mirror 7 is condensed by the objective lens 8, then reaches a recording surface of the optical disc 9 for image forming. When the information is reproduced, the laser beam B1, B2 or B3 which is reflected on the recording surface of the optical disc 9, passes the objective lens 8, and it is reflected by the beam shaping mirror 7, then a part of it is reflected by the beam splitter 4. The laser beam B1, B2 or B3 which is reflected by the beam splitter 4 is condensed by the condenser lens 5 and then reaches a light receiving surface of the photo detector 6 for image forming. The photo detector 6 detects light information of the laser beam B1, B2 or B3 which is received to output as an electric signal.

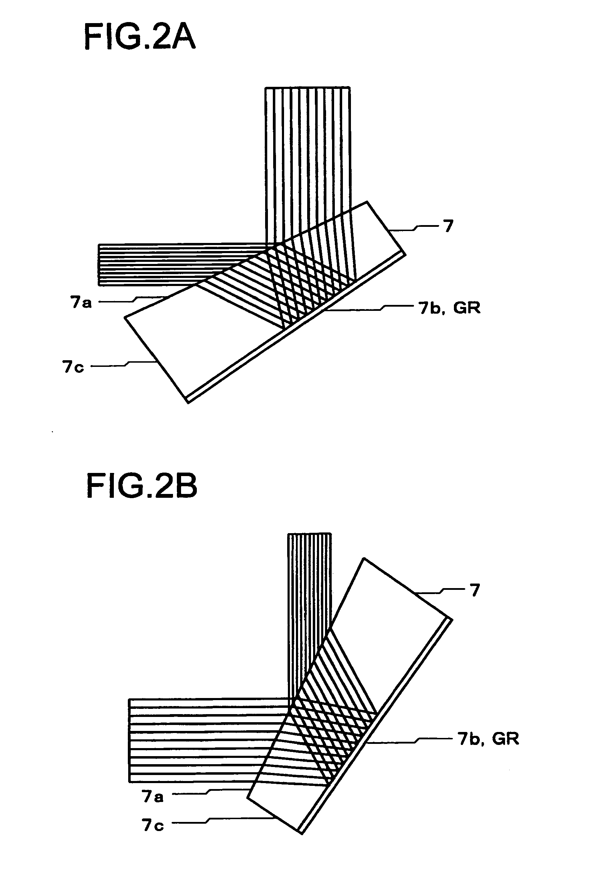

Generally in a beam shaping in which the laser beam is converted from the elliptic shape beam to the circular shape beam, there are a type that enlarges beam diameter in minor axis direction of a cross section of the elliptic beam and a type that reduces the beam diameter in major axis direction of the cross section of the elliptic beam. In the optical pickup device 10 which is shown Fig. 1, the beam shaping employs the type which enlarges the beam diameter in the minor axis direction of the cross section of the elliptic beam. However, it is possible to employ the beam shaping of the type in which the beam diameter is reduced in the major axis direction of the cross section of the elliptic beam in the optical pickup device 10 by change of a layout of the beam shaping mirror 7. In Fig. 2A a layout of the beam shaping mirror 7 and optical path are shown when the beam diameter is enlarged in the minor axis direction of the cross section of the elliptic beam. And in Fig. 2B a layout of the beam shaping mirror 7 and optical path are shown when the beam diameter is reduced in the major axis direction of the cross section of the elliptic beam.

When either type shown in Figs. 2A and 2B is employed for the beam shaping, the light intensity distribution of the laser beam can be converted from the elliptic shape to the circular shape which is ideal by adjustment of angle, space and the like formed by the transmission surface 7a and the reflection surface 7b to prescribed values. Therefore, it is possible to form a good beam spot which has high rim strength on the recording surface of the optical disc 9. At this point the reflection function of the reflection surface 7b can be obtained by forming a metal film or a dielectric multilayer on the transparent member 7c, for example.

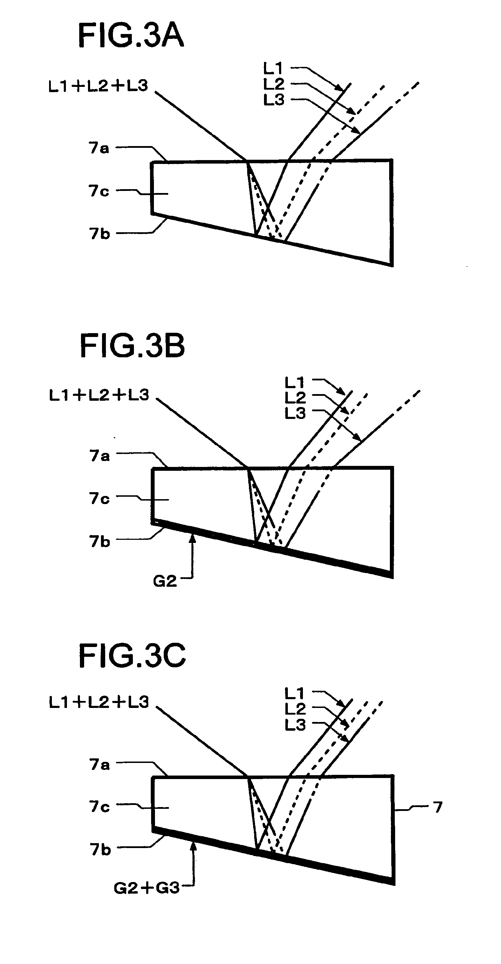

As for general prism type beam shaping element which has been well known heretofore, a transparent member which has a transmission surface and a reflection surface is employed to perform the beam shaping. The transmission surface and the reflection surface are not parallel each other. Because of this, the laser beam which is input to the transmission surface is made refract at different angle according to wavelength by dispersion characteristic of the transparent member. For example, as shown in Fig. 3A, if the blue laser light L1, the red laser light L2, and the infrared laser light L3 are input from the transmission surface 7a to the transparent member 7c at the same incident angle, a direction of output laser light L1, L2 and L3 from the transparent member 7c become different by difference of an angle of refraction at the transmission surface 7a i.e., dispersion characteristic, when the lights are input, because refractive index for the red laser light L2 is larger than refractive index for the infrared laser light L3 and refractive index for the blue laser light L1 is larger than the refractive index for the red laser light L2. This means that inclination is caused with respect to the optical axes of the laser beams for two wavelengths. As a result, correction must be performed by adding optical parts such that all the three laser lights L1, L2 and L3 have the same inclination state with respect to an optical axis AX (Fig. 1). In this embodiment, the problem is solved by utilizing a diffraction grating GR at the reflection surface 7b of the beam shaping mirror 7.

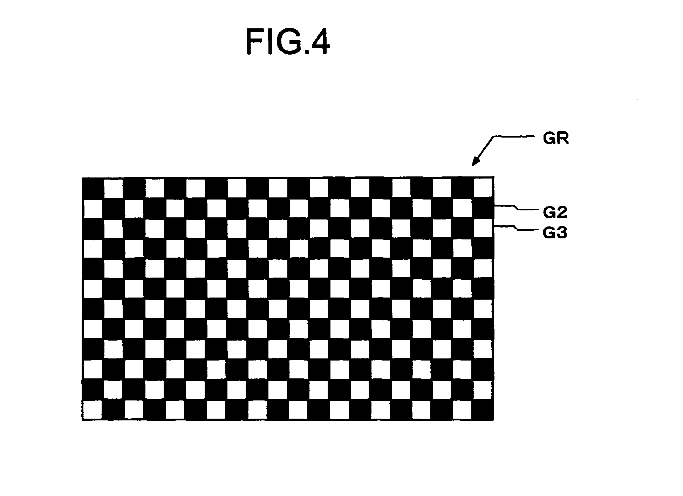

In Fig. 4 one example of layout pattern of the diffraction grating GR which is formed on the reflection surface 7b of the beam shaping mirror 7 is shown. In Fig. 4, black square parts are diffraction gratings G2 for the red laser and white square parts are diffraction gratings G3 for the infrared laser. This diffraction grating GR is composed of the two kinds of diffraction gratings G2 and G3 which are laid in a checkered pattern. Both of the diffraction gratings G2 and G3 are surface relief type diffraction gratings on which linear grooves are formed in certain intervals, however, pitches of the diffraction grating are different each other. That is to say, the diffraction grating GR is made so that the diffraction can be applied to two wavelengths λ2 and λ3 by two kinds of the diffraction structures which are formed on a same surface. To be more concrete, the diffraction grating GR has a structure in which the diffraction grating G2 for the red laser diffracts the red laser beam B2 without diffracting the blue laser beam B1 and the diffraction grating G3 for the infrared laser diffracts the infrared laser beam B3 without diffracting the blue laser beam B1 such that dispersion by the refracting action at the transmission surface 7a is cancelled out using the dispersion by the diffracting action at the reflection surface 7b.

In a case when the diffraction grating which is formed on the reflection surface 7b is only one kind, if the dispersion by the refracting action at the transmission surface 7a is intended to be canceled out using the dispersion by the diffracting action at the reflection surface 7b, it is impossible to diffract only any one of the red laser beam B2 or the infrared laser beam B3. For example, as shown in Fig. 3B, if only the diffraction grating G2 for the red laser is formed on the reflection surface 7b, the infrared laser light L3 is made to have different inclination state because the diffraction grating G2 diffracts only the red laser light L2. When two kinds of diffraction gratings G2 and G3 are formed on the reflection surface 7b as shown in Fig. 3C, it is possible to correct inclination of the optical axis for both of two wavelengths λ2 and λ3 by diffracting the red laser light L2 and the infrared laser light L3 without diffracting the blue laser light L1 such that dispersion by the refracting action at the transmission surface 7a is canceled out using the dispersion by the diffracting action at the reflection surface 7b. By this arrangement because the respective laser lights L1, L2 and L3 have the same inclination state, it becomes possible to make all the laser beams B1 to B3 input to the objective lens 8 from the same direction.

Next, concrete structure of the diffraction grating GR which is formed on the reflection surface 7b in the beam shaping mirror 7 will be explained based on result of simulation shown in Table 1. In this simulation, the laser beams which are input to the beam shaping mirror 7 are the blue laser beam B1, the red laser beam B2 and the infrared laser beam B3. The blue laser beam B1 is not diffracted, the red laser beam B2 is diffracted by the diffraction grating G2 for the red laser, the infrared laser beam B3 is diffracted by the diffraction grating G3 for the infrared laser. Further, material of the transparent member 7c which forms the beam shaping mirror 7 is polymethyl methacrylate (PMMA), and its refractive index for d line (nd) is 1.49, and the Abbe's number (vd) is 58.

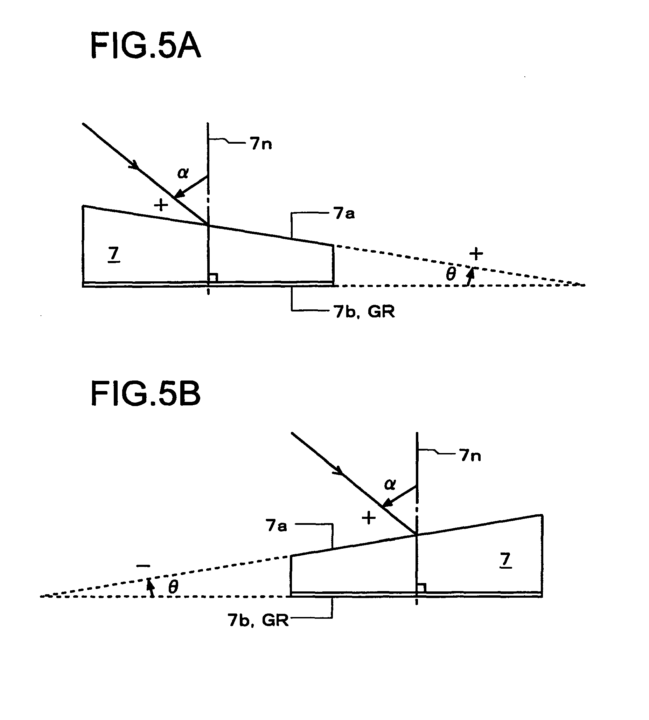

Parameters which are used in the simulation of the diffraction grating GR are shown in Fig. 5A and Fig. 5B. Fig. 5A shows an incident angle α and a wedge angle θ in a case where the beam diameter is enlarged in the minor axis direction of cross section of the elliptic beam as shown in Fig. 2A, i.e., beam shaping ratio is larger than 1, and Fig. 5B shows the incident angle α and the wedge angle θ in a case where the beam diameter is reduced in the major axis direction of cross section of the elliptic beam as shown in Fig. 2B, i.e., beam shaping ratio is smaller than 1. The incident angle α (degree) is an angle (acute angle) which is formed by the incident light to the beam shaping mirror 7 and a normal line 7n of the reflection surface 7b, and it is defined that it is positive when it goes from the normal line 7n in counter clockwise. The wedge angle θ (degree) is an angle (acute angle) which is formed by the transmission surface 7a and the reflection surface 7b, and it is defined that it is positive when it goes from the reflection surface 7b in clockwise if the incident angle α is positive.

The incident angle α and the wedge angle θ are set beforehand. The beam spot which is formed by the respective laser beams B1 to B3 that is output from the beam shaping mirror 7 is observed as changing grating constant (line / µm) of the diffraction grating GR which is formed on the reflection surface 7b and order of diffraction (clockwise direction is positive and counter clockwise direction is negative with reference to zero order light). Then result of the observation decides a condition by which the direction of the red laser beam B2 and the infrared laser beam B3 with respect to the blue laser beam B1 become substantially the same. At that time, the incident angle α is adjusted such that an angle which is formed by the input light and the output light at the beam shaping mirror 7 becomes ninety degrees. As a result of the simulation it is ascertained that the direction of the three laser beams B1 to B3 having the wavelength λ1 to λ3 respectively can be made substantially the same by correction of influence of color dispersion if the grating constant and the order of diffraction are adequately selected in cases of respective wedge angles θ shown in Table 1. Though optical axis misalignment (µm) of the red / infrared laser beams B2 and B3 with respect to the blue laser beam B1 is generated, the affection of the misalignment is within an extent which does not matter and the misalignment is within a allowable range by structure of the objective lens 8 and the like. Further, because the beam shaping ratio is changed in response to the wedge angle θ, setting of the wedge angle θ should be performed in consideration of difference of light intensity distribution of the laser beam due to used light source and the like.

As above described, because the optical pickup device 10 has a structure in which the two kinds of the diffraction gratings G2 and G3 are formed on the reflection surface 7b of the beam shaping mirror 7 and the plurality of the diffraction gratings G2 and G3 are formed alternately and side by side. And the laser beams B2 and B3 having wavelengths λ2 and λ3 respectively out of the three wavelengths λ1 to λ3 are diffracted by the two kinds of diffraction gratings G2 and G3 such that the dispersion by the refracting action at the transmission surface 7a is canceled out using the dispersion by the diffracting action at the reflection surface 7b, it is possible to correct the inclination with respect to the optical axis AX such that all the laser beams B1, B2 and B3 having the three wavelengths λ1, λ2 and λ3 respectively are input to the objective lens 8 from the same direction without increasing number of parts. In this way, it becomes possible to focus sufficiently beam spots for three wavelengths λ1 to λ3 to make them good ones which have high rim strength and light intensity distribution close to circular shape. Further, it becomes possible to compose whole optical system smaller and simpler in comparison with a case where a beam shaping element such as cylindrical lens or the like is disposed for each of wavelengths. As a result, it is possible to obtain good signal (for example, recording signal or reproducing signal) by the beam shaping for the three wavelengths λ1 to λ3 and the inclination correction with respect to the optical axis AX, though the device has simple and compact structure.

Because the two kinds of diffraction gratings G2 and G3 have a structure in which the blue laser beam B1 is not diffracted and the red / infrared laser beam B2 and B3 are diffracted, the light use efficiency of the blue laser beam B1 which is used without diffraction can be improved. As a result, required output power for the semiconductor laser 1b can be suppressed. Further, because the beam shaping mirror 7 is composed of the transparent member 7c having the trapezoidal shape cross section, reduction in size of the optical pickup device 10 can be attained more effectively.

Because the two kinds of diffraction gratings G2 and G3 are formed in the checkered pattern layout in the beam shaping mirror 7, the laser beams B1 to B3 are input to the two kinds of the diffraction gratings G2 and G3 equally. For this reason effect of the beam shaping can be equally obtained and the inclination correction with respect to the optical axis AX can be performed effectively even when any one of the laser beams B1 to B3 having the three wavelengths λ1 to λ3 respectively is used. At this point as far as the layout is a pattern in which the two kinds of diffraction gratings G2 and G3 are formed on the reflection surface 7b and the plurality of two kinds of diffraction gratings G2 and G3 are formed alternately and side by side such as strip pattern, stripe pattern, mosaic pattern or the like, it is possible to obtain similar effect with the layout in which the diffraction gratings G2 and G3 are laid in the checkered pattern.

Because the laser beams B1 to B3 can be input to the objective lens 8 from the same direction even when any one of the laser beams B1 to B3 having the three wavelengths λ1 to λ3 respectively is used, compatibility for the three kinds of optical discs 9 can be secured. For example, when the blue laser beam B1, the red laser beam B2 and the infrared laser beam B3 are used, it is possible to correspond to the three kinds of optical discs 9 of a CD, a DVD and a BD.

As will be appreciated from the above description, when the three wavelengths and one lens type optical pickup device has a structure in which the two kinds of diffraction gratings are formed on the reflection surface in the beam shaping mirror and the plurality of two kinds of diffraction gratings are formed alternately and side by side, and the laser beams having two out of the three wavelengths are diffracted by the two kinds of diffraction gratings such that dispersion by the refracting action at the transmission surface is canceled out using the dispersion by the diffracting action at the reflection surface. In this way, inclination with respect to the optical axis can be corrected such that all the laser beams having the three wavelengths are input to the objective lens from the same direction without increasing number of parts. Further, it becomes possible to focus sufficiently beam spots for three wavelengths to make them good ones which have high rim strength and light intensity distribution close to circular shape. Further, it becomes possible to compose whole optical system smaller and simpler in comparison with a case where a beam shaping element such as cylindrical lens or the like is disposed for each of wavelengths. As a result, it is possible to obtain good signal (for example, recording signal or reproducing signal) by the beam shaping for the three wavelengths and the inclination correction with respect to the optical axis, though the device has simple and compact structure.

When the two kinds of diffraction gratings have a structure in which the laser beam having one wavelength out of the three wavelengths is not diffracted but the laser beams having the other two wavelengths are diffracted by the two kinds of the diffraction gratings, because the light use efficiency of the laser beam which is used without diffraction can be improved, required output power for the laser light source can be suppressed. If the beam shaping mirror is composed of a transparent member having a trapezoidal shape cross section, reducing in size of the optical pickup device can be attained more effectively. Further, when the two kinds of the diffraction gratings are formed in the checkered pattern layout in the beam shaping mirror, because the laser beams are input to the each of two kinds of the diffraction gratings equally, effect of the beam shaping can be equally obtained even when any one of the laser beams having the three wavelengths respectively is used, and the inclination correction with respect to the optical axis can be performed effectively.

Because the laser beams can be input to the objective lens from the same direction even when any one of the laser beams having the three wavelengths respectively is used, compatibility for the three kinds of optical discs can be secured. For example, when the blue laser beam, the red laser beam and the infrared laser beam are used as the laser beams emitted from the three laser light sources, it is possible to correspond to three kinds of optical discs of a CD, a DVD and a BD.

**TABLE 1**

| wedge angle θ (deg) | incident angle α (deg) | grating constant (line / µm) | | order of diffraction | optical axis misalignment (µm) | | beam shaping ratio |
|---|---|---|---|---|---|---|---|
| 14 | 58.7 | red laser | 0.01445 | -1 | blue-red | 24.0 | 2.53 |
| | | infrared laser | 0.01442 | | blue-infrared | 30.0 | |
| 10 | 54.3 | red laser | 0.01027 | -1 | blue-red | 30.0 | 1.74 |
| | | infrared laser | 0.01026 | | blue-infrared | 37.0 | |
| 5 | 49.4 | red laser | 0.00511 | -1 | blue - red | 34.0 | 1.28 |
| | | infrared laser | 0.00510 | | blue-infrared | 40.0 | |
| -5 | 40.6 | red laser | 0.00511 | 1 | blue-red | 30.9 | 0.78 |
| | | infrared laser | 0.00510 | | blue-infrared | 37.0 | |
| -10 | 35.7 | red laser | 0.01027 | 1 | blue - red | 29.4 | 0.58 |
| | | infrared laser | 0.01026 | | blue - infrared | 32.7 | |

## Claims

1. A three wavelengths and one lens type optical pickup device which is applicable to three kinds of optical discs in which wavelengths of used laser beams are different by three laser light sources which emit laser beams having different wavelength each other, and one objective lens, the device comprising:
a beam shaping mirror in an optical path between the objective lens and the three laser light sources which converts light intensity distribution of the laser beams having the respective wavelengths from an elliptic shape to a circular shape by inputting the respective laser beams from a transmission surface, reflecting the laser beams by a reflection surface that is not parallel to the transmission surface and outputting the laser beams from the transmission surface,
the device is **characterized by** which
two kinds of diffraction gratings are formed on the reflection surface, the plurality of diffraction gratings are formed alternately and side by side, and
the two kinds of diffraction gratings diffract the laser beams having two out of the three wavelengths such that dispersion by the refracting action at the transmission surface is canceled out using the dispersion by the diffracting action at the reflection surface.

2. The optical pickup device according to claim 1, **characterized by** a structure in which the two kinds of diffraction gratings do not diffract the laser beam having one wavelength out of the three wavelengths but diffract the laser beams having the other two wavelengths.

3. The optical pickup device according to claim 1 or claim 2, **characterized by** a structure in which the beam shaping mirror is composed of a transparent member that has a trapezoidal shape cross section.

4. The optical pickup device according to any one of claim 1 to claim 3, **characterized by** a structure in which the two kinds of diffraction gratings are formed in a checkered pattern layout.

5. The optical pickup device according to any one of claim 1 to claim 4, **characterized by** a structure in which the three laser light sources are a laser light source which emits a blue laser beam, a laser light source which emits a red laser beam and a laser light source which emits an infrared laser beam.

6. A three wavelengths and one lens type optical pickup device which is applicable to three kinds of optical discs in which wavelengths of used laser beams are different by three laser light sources which emit respectively a blue laser beam, a red laser beam and an infrared laser beam and one objective lens, the device comprising:
a beam shaping mirror in an optical path between the objective lens and the three laser light sources which converts light intensity distribution of the laser beams having the respective wavelengths from an elliptic shape to a circular shape by inputting the respective laser beams from a transmission surface, reflecting the laser beams by a reflection surface that is not parallel to the transmission surface and outputting the laser beams from the transmission surface,
the device is **characterized by** which
the beam shaping mirror is composed of a transparent member that has a trapezoidal shape cross section,
two kinds of diffraction gratings are formed in a checkered pattern layout on the reflection surface, and
the two kinds of diffraction gratings diffract the red laser beam and the infrared laser beam without diffracting the blue laser beam such that dispersion by the refracting action at the transmission surface is canceled out using the dispersion by the diffracting action at the reflection surface.
